# EUROPEAN PATENT APPLICATION

(11) **EP 4 290 609 A1**
(43) Date of publication of application: **13.12.2023**
(21) Application number: 22762519.1
(22) Date of filing: 01.03.2022
(51) Int. Cl.: H01M 4/36, H01M 10/00, H01M 10/0525, H01M 4/58

(54) **NEGATIVE ELECTRODE MATERIAL, COMPOSITE NEGATIVE ELECTRODE MATERIAL AND PREPARATION METHOD THEREFOR, SECONDARY BATTERY, AND TERMINAL DEVICE**

(30) Priority: 01.03.2021 CN 202110225698
(71) Applicant: Huawei Technologies Co., Ltd., Shenzhen, Guangdong 518129 (CN)
(72) Inventor: LI, Zhengjie, Shenzhen, Guangdong 518129 (CN); SUN, Yongming, Wuhan, Hubei 430074 (CN); XIA, Shengan, Shenzhen, Guangdong 518129 (CN); LI, Yangxing, Shenzhen, Guangdong 518129 (CN); XIE, Fengchao, Shenzhen, Guangdong 518129 (CN)
(74) Representative: MERH-IP Matias Erny Reichl Hoffmann Patentanwälte PartG mbB
(86) International application number: PCT/CN2022/078609
(87) International publication number: WO 2022/184054

(57) **Abstract**

This application provides an anode material, a composite anode material, a preparation method thereof, a secondary battery, and a terminal device. The anode material includes a core (01) and a coating layer (02) disposed on a surface of the core. The core (01) is a substance that can be reversibly inserted into or removed from a cathode material active ion or a substance that can perform reversible oxidation-reduction reaction with the cathode material active ion. A material of the coating layer (02) includes AxMy, where 0<x≤3, 0<y≤7, A is a substance that is the same as the cathode material active ion, and M includes at least one of P, S, Se, Te, Sn, or Ge. The anode material has characteristics of a good cycle stability and a long service life.

## Description

### CROSS-REFERENCE TO RELATED APPLICATIONS

This application claims priority to Chinese Patent Application No. 202110225698.7, filed with the China National Intellectual Property Administration on March 1, 2021 and entitled "ANODE MATERIAL, COMPOSITE ANODE MATERIAL, PREPARATION METHOD THEREOF, SECONDARY BATTERY, AND TERMINAL DEVICE", which is incorporated herein by reference in its entirety.

### TECHNICAL FIELD

This application relates to the field of battery technologies, and in particular, to an anode material, a composite anode material, a preparation method thereof, a secondary battery, and a terminal device.

### BACKGROUND

Currently, a secondary battery, for example, a lithium ion battery, has been widely used in terminal devices such as a mobile phone, a notebook computer, a portable electronic mobile device, an uncrewed aerial vehicle, and an electric vehicle. For an energy storage unit of a terminal device, a volume energy density is a key indicator that determines a battery life of the energy storage unit. Currently, most commercial lithium ion batteries use lithium cobalt acid, lithium iron phosphate, or a ternary material as a cathode material, and graphite as an anode material. However, with increasing requirements for an energy density of the lithium ion battery in the market, research and development of an anode material of a high-capacity lithium ion battery are also increasingly urgent.

For the anode material of the lithium ion battery, a silicon material has become one of the most researched and most potential high-capacity anode materials due to an extremely high theoretical specific lithium storage capacity (a maximum of 4200 mAh/g), an abundant storage capacity, and low costs. Based on different reaction degrees, silicon and lithium may generate different products: Li₁₂Si₇, Li₁₃Si₄, Li₂₂Si₅, and the like. However, regardless of whether a silicon-based anode material or a carbon-based anode material is in a repeated charging and discharging process, when the silicon-based anode material or the carbon-based anode material is in direct contact with electrolyte, a surface layer of the silicon-based anode material or the carbon-based anode material falls off. The silicon-based anode material continuously reacts with the electrolyte to generate a new solid electrolyte interface (solid electrolyte interface, SEI) film, which increases consumption of the electrolyte and causes rapid attenuation of a battery capacity. However, poor compatibility between the carbon-based anode material and the electrolyte leads to likely flaking of a plate layer during the repeated charging and discharging process. As a result, for the secondary battery, a capacity is attenuated rapidly, cycle performance is reduced, and a service life is reduced.

### SUMMARY

This application provides an anode material, a composite anode material, a preparation method thereof, a secondary battery, and a terminal device, to improve a cycle stability and a service life of the anode material used in the secondary battery.

According to a first aspect, this application provides an anode material. The anode material includes a core and a coating layer disposed on a surface of the core. The core is a substance that can be reversibly inserted into or removed from a cathode material active ion or a substance that can perform reversible oxidation-reduction reaction with the cathode material active ion. A material of the coating layer includes AxMy, where 0<x≤3, 0<y≤7, A is a substance that is the same as the cathode material active ion, A can be reversiblely inserted into or removed from the core, or can perform the reversible oxidation-reduction reaction with the core, and M includes at least one of P, S, Se, Te, Sn, or Ge.

According to the anode material provided in this implementation of this application, the coating layer including AxMy is disposed on the surface of the core. A de-A potential of M in the coating layer is high, a structure is stable. This can provide a stable and complete coating layer for the core. The coating layer provided in this implementation of this application has high ion conductivity, and can promote rapid ion migration on an interface between the anode material and electrolyte, to improve rate performance. In addition, the AxMy coating layer may be used as an ultra-thin interface artificial SEI film, to alleviate side reactions caused by direct contact between a material and the electrolyte during charging and discharging, effectively reduce repeated reactions of the SEI film, and improve cycle performance. In addition, the AxMy coating layer can reduce an ion diffusion barrier, improve an ion migration rate at the interface, reduce ion concentration polarization on a surface of the material, improve ion removal/insertion efficiency, and improve battery cycle performance.

M in this implementation of this application includes at least one of P, S, Se, Te, Sn, or Ge. When M selects the element materials listed above, the obtained coating layer has high conductivity and good stability to an ion, and can significantly improve rate performance and cycle stability of a secondary battery or a secondary capacitor.

A is a substance that is the same as the cathode material active ion. Therefore, A includes but is not limited to one of Li, Na, K, Mg, Ca, or Al. When the secondary battery is a lithium ion battery, a material of the coating layer is LixMy. When the secondary battery is a sodium ion battery, a material of the coating layer is NaxMy. When the secondary battery is a potassium ion battery, a material of the coating layer is KxMy. When the secondary battery is a magnesium ion battery, a material of the coating layer is MgxMy. When the secondary battery is a calcium ion battery, a material of the coating layer is CaxMy. When the secondary battery is an aluminum ion battery, a material of the coating layer is AlxMy.

In a possible implementation of this application, the coating layer formed on the surface of the core is a uniform and continuous coating layer, and AxMy is evenly distributed in the coating layer. Therefore, the cathode material active ion is transmitted more evenly in the coating layer. This further avoids generation of dendrites and improves safety of the battery.

In a possible implementation of this application, a thickness of the coating layer is 5 to 30 nm, so that the coating layer maintains high structural strength while improving conductivity of the anode material, and the anode material has a high capacity.

In a possible implementation of this application, the coating layer includes a carbon material, and a mass proportion of the carbon material is 0.1% to 20% by using a weight of the coating layer as a measurement reference. By doping a specific quantity of carbon materials in the coating layer, the conductivity of the coating layer can be further improved.

The carbon material in the coating layer includes but is not limited to at least one of graphite, amorphous carbon, hard carbon, soft carbon, a mesocarbon microbead, a carbon nanotube, graphene, a carbon fiber, activated carbon, porous carbon, acetylene black, Ketjen black, or asphalt.

In a possible implementation of this application, a carbon layer is disposed on a surface that is of the coating layer and that is away from the core, to further improve the conductivity and fast charging of the anode material. A thickness of the carbon layer may be, for example, 5 to 20 nm.

Specifically, in a specific implementation, a material of the carbon layer includes at least one of graphite, amorphous carbon, hard carbon, soft carbon, a mesocarbon microbead, a carbon nanotube, graphene, a carbon fiber, activated carbon, porous carbon, acetylene black, Ketjen black, or asphalt.

In a possible implementation of this application, a material of the core includes at least one of a silicon-based material, a carbon-based material, a silicon carbon material, a metal material, a metal oxide material, or phosphorus.

In a specific implementation, the silicon-based material includes at least one of silicon, nano-silicon, micron silicon, porous silicon, thin film silicon, a silicon oxide, or a silicon oxide.

When the silicon-based material is specifically selected, the carbon-based material may include at least one of artificial graphite, natural graphite, the hard carbon, the soft carbon, the mesocarbon microbead, the carbon nanotube, the graphene, the carbon fiber, the activated carbon, the porous carbon, the acetylene black, or the Ketjen black.

When the metal material is specifically selected, the metal material may include at least one of a lithium metal, a sodium metal, a potassium metal, the tin, the germanium, a silicon-tin alloy, a silicon-germanium alloy, a lithium-silicon alloy, or a lithium-phosphorus alloy.

When the metal oxide is specifically selected, the metal oxide may include at least one of a tin dioxide, a germanium oxide, a cobalt oxide, or an iron oxide.

In a preferred implementation of this application, the material of the core includes at least one of silicon, a silicon oxide, a silicon oxide, silicon carbon, thin film silicon, a lithium metal, a lithium-silicon alloy, artificial graphite, natural graphite, the hard carbon, the soft carbon, the mesocarbon microbead, the carbon nanotube, the graphene, the carbon fiber, the activated carbon, the porous carbon, the acetylene black, or the Ketjen black.

In a possible implementation of this application, the material of the core includes a doping element, and the doping element includes at least one of oxygen, pyridinic nitrogen, pyrrolic nitrogen, boron, or the phosphorus, to further improve a capacity and fast charging performance of the anode material. A mass proportion of the doping element is 0.1% to 5% by using the material of the core as a measurement reference.

In a possible implementation of this application, a mass ratio of the core to the coating layer is 100:0.1 to 1.

According to a second aspect, this application further provides a preparation method for the anode material according to the first aspect. The preparation method includes the following step: forming the coating layer on the surface of the core.

A manner of forming the coating layer on the surface of the core includes: forming the coating layer on the surface of the core by using at least one of a ball milling method, a mechanical mixing method, a mechanical fusion method, an atomic layer deposition method, a vapor deposition method, a magnetron sputtering method, a liquid phase reaction method, a sol-gel method, a solvothermal method, a vacuum thermal deposition method, a plasma sputtering method, or a melting method.

In an implementation, a method for forming the coating layer on the surface of the core by using the ball milling method includes: performing ball milling processing on a raw material including a core particle, an M particle, and an A source substance, where after the M particle reacts with the A source substance, the coating layer is formed on the surface of the core; or performing ball milling processing on a raw material including a core particle, an M particle, an A source substance, and a first carbon material, where after the M particle reacts with the A source substance, the coating layer is formed on the surface of the core. A mass proportion of the core particle, the M particle, and the A source substance may be, for example, 1:0.05 to 0.2:0.1 to 0.5. An atmosphere in the ball milling processing is an inert atmosphere, a ball milling rotational speed is 400 to 1000 rpm, and ball milling time is 2 to 48h.

The A source substance is a substance that can form an A element and a gas after decomposition. The A element after the A source substance is decomposed reacts with the M element to form AxMy. The gas formed after the A source substance is decomposed is discharged to outside of the anode material, to avoid introducing impurities into the coating layer. For example, the A source substance includes but is not limited to at least one of a hydride of A, an oxide of A, a nitride of A, a carbonate of A, or oxalates of A.

In another implementation, a method for forming the coating layer on the surface of the core by using the ball milling method includes: performing ball milling processing on a raw material including a core particle and an M particle, and forming an intermediate cladding including M on the surface of the core, to obtain an intermediate product; and adding an A element to the intermediate cladding, and combining the M particle and the A element to perform A-based processing on the intermediate cladding to form AxMy, to form the coating layer on the surface of the core; or performing ball milling processing on a raw material including a core particle, an M particle, and a first carbon material, and forming an intermediate cladding including M on the surface of the core, to obtain an intermediate product; and adding an A element to the intermediate cladding, and combining the M particle and the A element to perform A-based processing on the intermediate cladding, to form the carbon material on the surface of the core.

The A-based processing includes the following steps: mixing the intermediate product with a conductive agent and a binder, coating the mixed intermediate product, conductive agent, and binder on a current collector, and drying the current collector to obtain an electrode; and assembling the electrode and a foil of A into a secondary battery, and completing the A-based processing on the intermediate cladding after charging and discharging processing. A mass ratio of the intermediate product, the conductive agent, and the binder may be, for example, 80 to 95:1 to 10:1 to 10. A current during charging and discharging processing may be, for example, 0.01 C to 1.0 C. Through charging and discharging processing, convergence between A and M is implemented.

In a possible implementation of this application, after the forming the coating layer on the surface of the core, the preparation method further includes: forming the carbon layer on the surface of the coating layer.

Specifically, the forming the carbon layer on the surface of the coating layer includes: forming the carbon layer on the surface of the coating layer by using one of the ball milling method, the mechanical fusion method, a high temperature sintering method, an epitaxial growth method, the vapor deposition method, a magnetron sputtering method, or the solvothermal method.

In a possible implementation of this application, the forming the carbon layer on the surface of the coating layer by using the ball milling method includes, for example, mixing an intermediate material formed after the core is coated with the coating layer with a carbon source material, and performing ball milling processing to form the carbon layer on the surface of the coating layer. In the ball milling, the ball milling rotational speed may be 10 to 2000 revolutions/minute, the ball milling time may be 0.1 to 12 hours, and a reaction temperature may be 100 to 800°C.

In another possible implementation of this application, the forming the carbon layer on the surface of the coating layer by using the mechanical fusion method includes, for example, mixing an intermediate material formed after the core is coated with the coating layer with a carbon source material, and performing mixing processing to form the carbon layer on the surface of the coating layer. In the mixing processing, a mixing rate may be 10 to 2000 revolutions/minute, mixing time may be 0.1 to 12 hours, and a reaction temperature may be 100 to 800°C.

According to a third aspect, this application further provides a composite anode material, including an active component and the anode material in this application. By using the anode material in the first aspect of this application in cooperation with the active component, a material with better fast charging performance can be further obtained based on an advantage of the anode material in this application.

Specifically, the active component includes, for example, at least one of the silicon-based material, the carbon-based material, the carbide material, the metal material, or the metal oxide material.

The silicon-based material includes, for example, at least one of the silicon, the nano-silicon, the micron silicon, the silicon oxide, the silicon oxide, the porous silicon, or the thin film silicon.

The carbon-based material includes, for example, the artificial graphite, the natural graphite, the hard carbon, the soft carbon, the mesocarbon microbead, phosphorus doped carbon, oxygen doped carbon, nitrogen doped carbon, boron doped carbon, sulfur doped carbon, silicon doped carbon, fluorine doped carbon, the carbon nanotube, the graphene, the carbon fiber, the activated carbon, the porous carbon, the acetylene black, or the Ketjen black.

The carbonized material includes, for example, at least one of silicon carbon, tin carbon, or germanium carbon.

The metal material includes, for example, at least one of metal tin, micron tin, porous tin, thin film tin, metal germanium, porous germanium, thin film germanium, micron germanium, the lithium metal, the lithium-silicon alloy, a lithium-tin alloy, or a lithium germanium alloy.

The metal oxide includes, for example, at least one of a tin oxide, the germanium oxide, the iron oxide, the cobalt oxide, a nickel oxide, a manganese oxide, or a zinc oxide.

As a preferred implementation, the active component is selected from at least one of the artificial graphite, the natural graphite, the hard carbon, the silicon, the nano-silicon, the micron silicon, the silicon oxide, the silicon oxide, the silicon carbon, the tin, the lithium-tin alloy, the lithium-silicon alloy, the tin oxide, or the lithium metal.

In an implementation of this application, in the composite anode material, a mass proportion of the active components is 0.1% to 20%.

According to a fourth aspect, this application further provides a preparation method for the foregoing composite anode material. In the preparation method, the composite anode material is formed by mixing the active component and the anode material.

According to a fifth aspect, this application further provides a secondary battery. The secondary battery includes a negative plate, the negative plate includes an anode current collector, and an anode active substance layer coated on a surface of at least one side of the anode current collector, and the anode active substance layer includes the anode material in each possible implementation of this application or the composite anode material in each possible implementation of this application. The secondary battery provided in this application has advantages of high rate performance and good cycle performance.

According to a sixth aspect, this application further provides a terminal device. The terminal device includes the secondary battery in the fifth aspect of this application. The terminal device includes but is not limited to an electronic apparatus, an electric vehicle, an electric power storage system, and the like. Because the secondary battery provided in this implementation of this application has good cycle stability and rate performance, the terminal device that uses the secondary battery provided in each possible implementation of this application as a drive power supply may also obtain a same effect. Details are not described herein again.

### BRIEF DESCRIPTION OF DRAWINGS

FIG. 1 is a schematic diagram of a working principle of a charging and discharging process of a lithium ion battery;
FIG. 2 is a schematic diagram of a structure of a primary particle of an anode material according to an embodiment of this application;
FIG. 3 is a schematic diagram of a structure of a secondary particle in an anode material according to an embodiment of this application;
FIG. 4 is a schematic diagram of a structure of a primary particle of an anode material according to another embodiment of this application;
FIG. 5 is a schematic diagram of a structure of a composite anode material according to an embodiment of this application;
FIG. 6 is a schematic diagram of a structure of a secondary battery according to an embodiment of this application;
FIG. 7 is a schematic diagram of a structure of an all-solid-state secondary battery according to an embodiment of this application;
FIG. 8 is a schematic diagram of a structure of a negative plate according to an embodiment of this application;
FIG. 9 shows charge and discharge curves of a Si-P anode;
FIG. 10 shows a cyclic voltammetry curve of a Si-P anode; and
FIG. 11 is a schematic diagram of a lithium intercalation process of a Si-P anode.

### Reference numerals:

10: shell; 11: positive plate; 12: negative plate; 121: anode current collector; 122: anode active substance layer; 13: separator;
14: electrolyte; 15: solid electrolyte; 001: primary particle; 002: secondary particle; 003: active component;
01: core; 02: coating layer; and 03: carbon layer.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but not to limit this application. Terms "one", "a", "the", "the foregoing", "this", and "the one" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "comprise", "have", and their variants all mean "include but are not limited to", unless otherwise specifically emphasized.

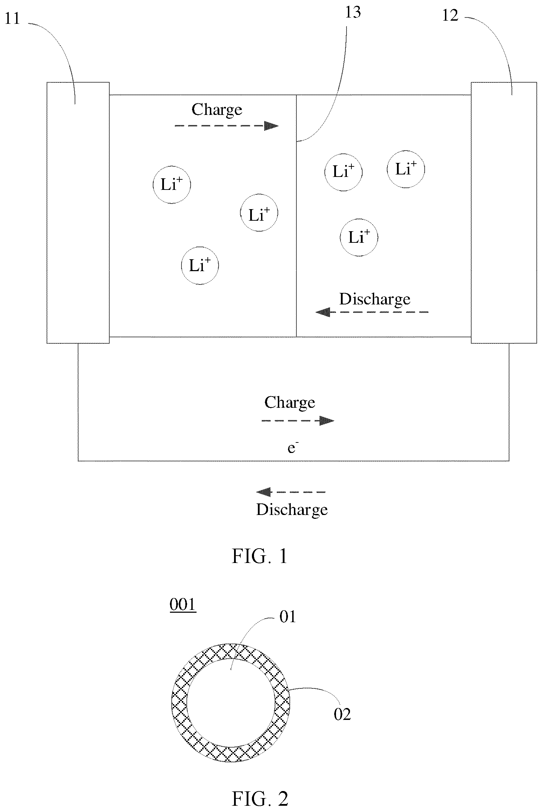

Currently, a secondary battery that can implement cyclic charging and discharging, for example, a lithium ion battery, has been widely used in terminal devices such as a mobile phone, a notebook computer, a portable electronic mobile device, an uncrewed aerial vehicle, and an electric vehicle. FIG. 1 is a schematic diagram of a working principle of a charging and discharging process of a lithium ion battery. As shown in FIG. 1, during charging, a lithium ion is removed from a lattice of a cathode material, passes through electrolyte, passes through a separator 13, and then is inserted into a lattice of an anode material, so that a negative plate 12 is rich in lithium, a positive plate 11 is poor in lithium, and an electron flows from the positive plate 11 to the negative plate 12. During discharging, the lithium ion is removed from the lattice of the anode material, passes through the electrolyte, passes through the separator 13, and then is inserted into the lattice of the cathode material, so that the positive plate 11 is rich in lithium, the negative plate 12 is poor in lithium, and an electron flows from the negative plate 12 to the positive plate 11 to supply power to an external terminal device.

A cathode material in the positive plate 11 mostly uses lithium cobalt acid, lithium iron phosphate, or a ternary material, and an anode material in the negative plate 12 mostly uses graphite. However, with increasing requirements for an energy density of the lithium ion battery in the market, research and development of an anode material of a high-capacity lithium ion battery are also increasingly urgent. For the anode material of the lithium ion battery, using silicon as an example, a silicon material has become one of the most researched and most potential high-capacity anode materials due to an extremely high theoretical specific lithium storage capacity (a maximum of 4200 mAh/g), an abundant storage capacity, and low costs. However, after the silicon reacts with lithium, volume expansion of 300%+is generated. Mechanical stress generated by a huge volume change likely causes powdering of the silicon, and consequently, electrochemical activity of a silicon particle is deactivated. In addition, the volume change of the silicon further causes damage to an electrode structure. In addition, when a silicon-based material is in direct contact with electrolyte, a surface of the silicon-based material continuously reacts with the electrolyte to generate a new SEI film, which increases consumption of the electrolyte and causes rapid attenuation of a battery capacity. In addition, when existing graphite is used as the anode material, a problem that the graphite likely flakes off in a process of contact with the electrolyte also exists, which seriously affects cycle performance and a service life of the lithium ion battery.

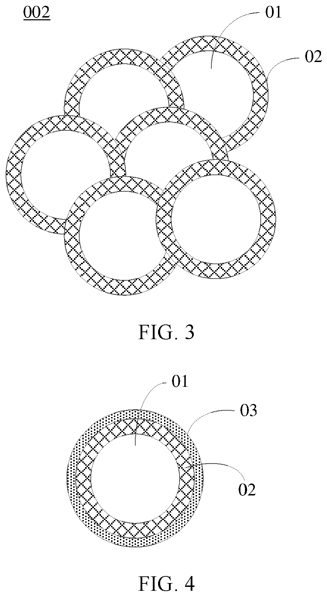

To resolve the foregoing technical problem, an embodiment of this application provides an anode material. FIG. 2 is a schematic diagram of a structure of a primary particle 001 of an anode material according to an embodiment of this application. FIG. 3 is a schematic diagram of a structure of a secondary particle 002 in an anode material according to an embodiment of this application. The secondary particle 002 is formed by aggregating at least two primary particles 001. In this embodiment of this application, in an application process, the anode material usually exists in a form of the secondary particle 002.

With reference to FIG. 2 and FIG. 3, in an embodiment of this application, the primary particle 001 of the anode material is of a core-shell structure, the core-shell structure includes a core 01 and a coating layer 02 disposed on a surface of the core. The core 01 is a substance that can be reversibly inserted into or removed from a cathode material active ion or a substance that can perform reversible oxidation-reduction reaction with the cathode material active ion. A material of the coating layer 02 includes AxMy, where 0<x≤3, 0<y≤7, A is a substance that is the same as a cathode material active ion, and M includes at least one of P, S, Se, Te, Sn, or Ge.

### Core 01

Still refer to FIG. 2. It may be understood that, the core 01 is a substance that can be reversibly inserted into or removed from the cathode material active ion or a substance that can perform the reversible oxidation-reduction reaction with the cathode material active ion. Therefore, when the cathode material active ion is a lithium ion, during charging, the lithium ion can be inserted into the core 01 or a reduction reaction occurs when the lithium ion is migrated to the core 01; and during discharging, the lithium ion can be removed from the core 01 or an oxidation-reduction reaction occurs and the lithium ion is removed from the core 01. When the cathode material active ion is a sodium ion, during charging, the sodium ion can be inserted into the core 01 or a reduction reaction occurs when the sodium ion is migrated to the core 01; and during discharging, the sodium ion can be removed from the core 01 or an oxidation-reduction occurs and the sodium ion is removed from the core 01. When the active ion of the cathode material is a potassium ion, during charging, the potassium ion can be inserted into the core 01 or a reduction reaction occurs when the potassium ion is migrated to the core 01; and during discharging, the potassium ion can be removed from the core 01 or an oxidation-reduction occurs and the potassium ion is removed from the core 01. When the cathode material active ion is a magnesium ion, during charging, the magnesium ion can be inserted into the core 01 or a reduction reaction occurs when the magnesium ion is migrated to the core 01; and during discharging, the magnesium ion can be removed from the core 01 or an oxidation-reduction occurs and the magnesium ion is removed from the core 01. When the cathode material active ion is a calcium ion, during charging, the calcium ion can be inserted into the core 01 or a reduction reaction occurs when the calcium ion is migrated to the core 01; and during discharging, the calcium ion can be removed from the core 01 or an oxidation-reduction occurs and the calcium ion is removed from the core 01. When the active ion of the cathode material is an aluminum ion, during charging, the aluminum ion can be inserted into the core 01 or a reduction reaction occurs when the aluminum ion is migrated to the core 01; and during discharging, the aluminum ion can be removed from the core 01 or an oxidation-reduction occurs and the aluminum ion is removed from the core 01.

The core 01 includes, for example, at least one of a silicon-based material, a carbon-based material, a silicon carbon material, a metal material, a metal oxide material, or phosphorus.

For example, the silicon-based material may be, for example, at least one of silicon, nano-silicon, micron silicon, porous silicon, thin film silicon, a silicon oxide, or a silicon oxide (SiOx, 0.3<x<1.7). The carbon-based material may be at least one of artificial graphite, natural graphite, hard carbon, soft carbon, a mesocarbon microbead, a carbon nanotube, graphene, a carbon fiber, activated carbon, porous carbon, acetylene black, or Ketjen black. The metal material includes at least one of a lithium metal, a sodium metal, a potassium metal, tin, germanium, a silicon-tin alloy, a silicon-germanium alloy, a lithium-silicon alloy, or a lithium-phosphorus alloy. The metal oxide includes at least one of a tin dioxide, a germanium oxide, a cobalt oxide, or an iron oxide. A specific selection of a material of the core 01 may be determined based on a type of a secondary battery that is specifically used.

In a possible embodiment of this application, the material of the core 01 may be selected from at least one of the nano-silicon, the micron silicon, the silicon oxide, the silicon oxide (SiOx, 0.3<x<1.7), silicon carbon, the porous silicon, the thin film silicon, the lithium metal, the lithium-silicon alloy, the artificial graphite, the natural graphite, the hard carbon, the soft carbon, the mesocarbon microbead, the carbon nanotube, the graphene, the carbon fiber, the activated carbon, the porous carbon, the acetylene black, or the Ketjen black.

In an embodiment of this application, the material of the core 01 may further include a doping element, to increase conductivity of the material of the core. Specifically, the doping element may include at least one of oxygen, pyridinic nitrogen, pyrrolic nitrogen, boron, or the phosphorus. An added amount of the doping element is 0. 1wt% to 5wt% by using an overall weight of the core 01 as a measurement reference. A typical but non-limiting added amount of the doping element may be, for example, 0.1wt%, 0.3wt%, 0.5wt%, 0.7wt%, 1.0wt%, 1.1wt%, 1.3wt%, 1.5wt%, 2wt%, 2.5wt%, 3wt%, 3.5wt%, 4wt%, 4.5wt%, or 5wt%.

### Coating layer 02

Still refer to FIG. 2. A material of the coating layer 02 in this embodiment of this application includes AxMy, and the AxMy is formed on the surface of the core 01, and the surface of the core 01 is coated. A is the same as the cathode material active ion, and A can be reversibly inserted into or removed from the core 01, or can perform a reversible oxidation-reduction reaction with the core 01. Therefore, compared with the cathode material active ion, the coating layer 02 has high ion conductivity, and can promote rapid ion migration on an interface between the anode material and the electrolyte, to improve rate performance. The coating layer 02 can reduce an ion diffusion barrier, improve an ion migration rate at the interface, reduce ion concentration polarization on a surface of the material, improve ion removal/insertion efficiency, and improve battery cycle performance.

In the coating layer 02, M includes at least one of P, S, Se, Te, Sn, or Ge. In a charging and discharging process, the coating layer 02 does not have a de-A problem, so that the coating layer 02 can maintain stability of a structure and a function.

In the coating layer 02, A includes but is not limited to one of Li, Na, K, Mg, Ca, or Al.

When the secondary battery is a lithium ion battery, a material of the coating layer 02 is mainly LixMy. When the secondary battery is a sodium ion battery, a material of the coating layer 02 is mainly NaxMy. When the secondary battery is a potassium ion battery, a material of the coating layer 02 is mainly KxMy. When the secondary battery is a magnesium ion battery, a material of the coating layer 02 is mainly MgxMy. When the secondary battery is a calcium ion battery, a material of the coating layer 02 is mainly CaxMy. When the secondary battery is an aluminum ion battery, a material of the coating layer 02 is mainly AlxMy.

In an embodiment of this application, the coating layer formed on the surface of the core is a uniform and continuous coating layer, and AxMy is evenly distributed in the coating layer. Therefore, the cathode material active ion is transmitted more evenly in the coating layer. This further avoids generation of dendrites and improves safety of the battery.

In an embodiment of this application, a thickness of the coating layer 02 may be, for example, 5 to 30 nm. Specifically, a thickness of the coating layer 02 is typically but not limited to, for example, 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, 20 nm, 21 nm, 22 nm, 23 nm, 24 nm, 25 nm, 26 nm, 27 nm, 28 nm, 29 nm, or 30 nm.

In an embodiment of this application, a carbon material is doped in the coating layer 02. A mass proportion of the carbon material may be, for example, 0.1% to 20%, by using a weight of the coating layer 02 as a measurement reference. Specifically, the mass proportion of the carbon material may be, for example, 0.1%, 0.5%, 1%, 1.2%, 1.5%, 1.8%, 2%, 2.5%, 3%, 4%, 5%, 8%, 10%, 12%, 14%, 16%, 18%, or 20%.

Specifically, the carbon material doped in the coating layer 02 may be, for example, at least one of graphite, amorphous carbon, hard carbon, soft carbon, a mesocarbon microbead, a carbon nanotube, graphene, a carbon fiber, activated carbon, porous carbon, acetylene black, Ketjen black, or asphalt.

The following specifically describes a preparation method for an anode material in this application with reference to FIG. 2.

In an embodiment provided in this application, when the coating layer 02 is formed on the surface of the core 01, a method that may be used may be, for example, at least one of a ball milling method, a mechanical mixing method, a mechanical fusion method, an atomic layer deposition method, a vapor deposition method, a magnetron sputtering method, a liquid phase reaction method, a sol-gel method, a solvothermal method, a vacuum thermal deposition method, a plasma sputtering method, or a melting method. To reduce manufacturing costs, in an embodiment of this application, the coating layer 02 may be formed on the surface of the core 01 by using the ball milling method.

Specifically, in an embodiment of this application, a specific step of forming the coating layer 02 on the surface of the core 01 by using the ball milling method may include: performing ball milling processing on a raw material including a core particle, an M particle, an A source substance, and an optional first carbon material, and forming the coating layer 02 on the surface of the core 01 after the M particle reacts with the A source substance. A mass ratio of the core particle, the M particle, and the A source substance may be, for example, 1:0.05 to 0.2:0.1 to 0.5. An atmosphere in the ball milling processing is an inert atmosphere, a ball milling rotational speed is 400 to 1000 rpm, and ball milling time is 2 to 48h. A material of the core particle is the same as that of the core 01.

According to the preparation method in the foregoing embodiment of this application, a uniform and continuous coating layer 02 may be formed on the surface of the core 01, so that the cathode material active ion in the battery is transmitted more evenly in the coating layer 02. This avoids generation of dendrites and improves safety and cycle stability of the battery.

It should be noted that the A source substance is a substance that can provide an A element, and that can form the A element and a gas after the A source substance is decomposed. The A element after the A source substance is decomposed reacts with an M element to form AxMy. The gas formed after the A source substance is decomposed is discharged to outside of the anode material, to avoid introducing impurities into the coating layer. It should be noted that the A source substance may form the gas after the A source substance is decomposed, which does not necessarily mean that the gas is generated at a normal temperature, but may alternatively be generated under another condition, for example, a heating condition. For example, the A source substance includes but is not limited to at least one of a hydride of A, an oxide of A, a nitride of A, a carbonate of A, or an oxalic acid of A.

When A is lithium, the A source substance may be, for example, lithium hydride, a lithium oxide, lithium nitride, lithium carbonate, or lithium oxalate. When A is sodium, the A source substance may be, for example, sodium hydride, a sodium oxide, sodium nitride, sodium carbonate, or sodium oxalate. When A is potassium, the A source substance may be, for example, potassium hydride, a potassium oxide, potassium nitride, potassium carbonate, or potassium oxalate. When A is another metal element, the rest may be deduced by analogy.

It may be understood that, when the optional first carbon material is mixed with another raw material and the ball milling processing is performed, the first carbon material may be added or the first carbon material may not be added based on a specific requirement. Therefore, the formed coating layer 02 includes the first carbon material or does not include the first carbon material. The first carbon material includes but is not limited to at least one of graphite, amorphous carbon, hard carbon, soft carbon, a mesocarbon microbead, a carbon nanotube, graphene, a carbon fiber, activated carbon, porous carbon, acetylene black, Ketjen black, or asphalt.

In the foregoing embodiment, the mass ratio of the core particle, the M particle, and the A source substance is typically but not limited to 1:0.05:0.1, 1:0.07:0.1, 1:0.1:0.1, 1:0.13:0.1, 1:0.15:0.1, 1:0.18:0.1, 1:0.2:0.1, 1:0.1:0.15, 1:0.1:0.2, 1:0.1:0.25, 1:0.1:0.3, 1:0.1:0.35, 1:0.1:0.4, 1:0.1:0.45, or 1:0.1:0.5.

In the foregoing embodiment, the atmosphere in the ball milling processing is, for example, an argon atmosphere. The ball milling rotational speed is typically but not limited to 400 rpm, 500 rpm, 600 rpm, 700 rpm, 800 rpm, 900 rpm, or 1000 rpm. The ball milling time is typically but not limited to 2h, 4h, 8h, 10h, 15h, 18h, 20h, 22h, 25h, 28h, 30h, 32h, 35h, 38h, 40h, 42h, 45h, or 48h.

In another embodiment of this application, a specific step of forming the coating layer 02 on the surface of the core 01 by using the ball milling method includes: performing ball milling processing on a raw material including a core particle, an M particle, and an optional first carbon material, forming an intermediate cladding including an M element on a surface of the core particle, to obtain an intermediate product; and adding an A element to the intermediate cladding, and combining the M element and the A element to form AxMy; and performing A-based processing on the intermediate cladding, and forming the coating layer 02 on the surface of the core 01. A mass ratio of the core particle to the M particle may be, for example, 1 :0.05 to 0.2. An atmosphere in the ball milling processing is an inert atmosphere, a ball milling rotational speed is 400 to 1000 rpm, and ball milling time is 2 to 48h.

According to the preparation method in the foregoing embodiment of this application, a uniform and continuous coating layer 02 may be formed on the surface of the core 01, so that the cathode material active ion in the battery is transmitted more evenly in the coating layer 02. This avoids generation of dendrites and improves safety and cycle stability of the battery.

It may be understood that, when A is lithium, A-based processing is lithiumization processing; when A is sodium, A-based processing is sodiumization processing; when A is potassium, A-based processing is potassiumization processing; when A is magnesium, A-based processing is magnesiumization processing; when A is calcium, A-based processing is calcification processing; and when A is aluminum, A-based processing is aluminumization processing. When A is another substance, the rest may be deduced by analogy.

In the foregoing embodiment, the mass ratio of the core particle to the M particle is typically but not limited to 1:0.05, 1:0.07, 1:0.1, 1:0.13, 1:0.15, 1:0.18, or 1:0.2.

In the foregoing embodiment, the atmosphere in the ball milling processing is, for example, an argon atmosphere. The ball milling rotational speed is typically but not limited to 400 rpm, 500 rpm, 600 rpm, 700 rpm, 800 rpm, 900 rpm, or 1000 rpm. The ball milling time is typically but not limited to 2h, 4h, 8h, 10h, 15h, 18h, 20h, 22h, 25h, 28h, 30h, 32h, 35h, 38h, 40h, 42h, 45h, or 48h.

Specifically, the performing A-based processing on the intermediate product includes the following steps:
mixing the intermediate product, a conductive agent, and a binder, and coating the mixed intermediate product, conductive agent, and binder on a current collector, and drying the current collector to obtain an electrode, where a mass ratio of the intermediate product, the conductive agent, and the binder may be, for example, 80 to 95:1 to 10:1 to 10; and
assembling the electrode and a metal A into a secondary battery, and completing the A-based processing on the intermediate cladding in the intermediate product after charging and discharging processing, where a current in the charging and discharging processing may be, for example, 0.01 C to 1.0 C.

In the A-based processing, the mass ratio of the intermediate product, the conductive agent, and the binder is typically but not limited to 80:1:1, 82:1:1, 84:1:1, 86:1:1, 88:1:1, 90:1:1, 92:1:1, 95:1:1, 88:2:1, 88:3:1, 88:4:1, 88:5:1, 88:6:1, 88:7:1, 88:8:1, 88:9:1, 88:10:1, 88:5:2, 88:5:3, 88:5:4, 88:5:5, 88:5:6, 88:5:7, 88:5:8, 88:5:9, or 88:5:10.

In the A-based processing, the current in the charging and discharging processing is typically but not limited to 0.01 C, 0.05 C, 0.1 C, 0.15 C, 0.2 C, 0.25 C, 0.3 C, 0.35 C, 0.4 C, 0.45 C, 0.5 C, 0.55 C, 0.6 C, 0.65 C, 0.7 C, 0.75 C, 0.8 C, 0.85 C, 0.9 C, 0.95 C, or 1.0 C.

FIG. 4 is a schematic diagram of a structure of a primary particle of an anode material according to another embodiment of this application. As shown in FIG. 4, in an embodiment of this application, a carbon layer 03 is disposed on an outer side of the coating layer 02, and a thickness of the carbon layer 03 may be, for example, 5 to 20 nm. The carbon layer may be typically but not limited to, for example, 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, and 20 nm.

In an embodiment of this application, a material of the carbon layer 03 may be, for example, at least one of graphite, amorphous carbon, hard carbon, soft carbon, a mesocarbon microbead, a carbon nanotube, graphene, a carbon fiber, activated carbon, porous carbon, acetylene black, Ketjen black, or asphalt.

In an embodiment of this application, structures of several typical but not limited anode materials are listed as follows: a hard carbon/lithium phosphate/silicon anode material, a graphene/lithium phosphate/silicon carbon anode material, a carbon nanotube/lithium phosphate/silicon oxide anode material, a soft carbon/lithium phosphate/(silicon carbon+graphite) anode material, a hard carbon/lithium phosphate/(a silicon oxide+graphite) anode material, a hard carbon/lithium phosphate/(a silicon oxide+graphite+a carbon nanotube) anode material, an amorphous carbon/lithium phosphate/(silicon carbon+graphite+graphene) anode material, an amorphous carbon/selenium/silicon carbon anode material, and an amorphous carbon/lithium telluride/silicon oxide anode material.

Materials in the foregoing structure composition sequentially represent a material of a carbon layer, a material of a coating layer, and a material of a core. In the foregoing listed structures, the hard carbon/lithium phosphate/silicon anode material is used as an example. A material of a carbon layer of the anode material is the hard carbon, a material of a coating layer of the anode material is the lithium phosphate, and a material of a core of the anode material is the silicon. Material composition of other anode materials is based on the foregoing explanations.

The following specifically describes a preparation method for an anode material according to another embodiment of this application with reference to FIG. 4.

In an embodiment of this application, the preparation method for an anode material includes: after forming the coating layer 02 on the surface of the core 01, forming the carbon layer 03 on the surface of the coating layer 02 by using one of a ball milling method, a mechanical fusion method, a high temperature sintering method, an epitaxial growth method, a vapor deposition method, a magnetron sputtering method, or a solvothermal method.

To simplify a preparation process and reduce manufacturing costs, the carbon layer 03 may be preferably formed on the surface of the coating layer 02 by using the ball milling method or the mechanical fusion method.

The ball milling method is used as an example, in an embodiment of this application, the forming a carbon layer 03 on the surface of the coating layer 02 by using the ball milling method includes: mixing an intermediate material formed after the core 01 is coated by the coating layer 02 with a carbon source material, and after ball milling processing, forming the carbon layer 03 on the surface of the coating layer 02.

In the ball milling processing, a ball milling rotational speed is 10 to 2000 rpm, ball milling time is 0.1 to 12h, and a reaction temperature is 100 to 800°C.

In the foregoing embodiment, the ball milling rotational speed is typically but not limited to 10 rpm, 50 rpm, 100 rpm, 200 rpm, 300 rpm, 500 rpm, 600 rpm, 800 rpm, 1000 rpm, 1200 rpm, 1300 rpm, 1400 rpm, 1500 rpm, 1600 rpm, 1700 rpm, 1800 rpm, 1900 rpm, or 2000 rpm. The ball milling time is typically but not limited to 0.1h, 0.5h, 1h, 2h, 3h, 4h, 5h, 6h, 7h, 8h, 9h, 10h, 11h, or 12h. The reaction temperature is typically but not limited to 100°C, 200°C, 300°C, 400°C, 500°C, 600°C, 700°C, or 800°C.

The mechanical fusion method is used as an example. In another embodiment of this application, the forming a carbon layer 03 on the surface of the coating layer 02 by using the mechanical fusion method includes: mixing an intermediate material formed after the core 01 is coated by the coating layer 02 with a carbon source material, and after mixing processing, forming the carbon layer 03 on the surface of the coating layer 02.

In the mixing process, a mixing rate is 10 to 2000 rpm, mixing time is 0.1 to 12h, and a reaction temperature is 100 to 800°C.

In the foregoing embodiment, the mixing rate is typically but not limited to 10 rpm, 50 rpm, 100 rpm, 200 rpm, 300 rpm, 500 rpm, 600 rpm, 800 rpm, 1000 rpm, 1200 rpm, 1300 rpm, 1400 rpm, 1500 rpm, 1600 rpm, 1700 rpm, 1800 rpm, 1900 rpm, or 2000 rpm. The mixing time is typically but not limited to 0.1h, 0.5h, 1h, 2h, 3h, 4h, 5h, 6h, 7h, 8h, 9h, 10h, 11h, or 12h. The reaction temperature is typically but not limited to 100°C, 200°C, 300°C, 400°C, 500°C, 600°C, 700°C, or 800°C.

After the anode material provided in this embodiment of this application or the anode material obtained by using the preparation method in this embodiment of this application forms the coating layer whose main raw material is AxMy on the surface of the core, in addition to being used as a fast transmission channel of an active ion to improve conductivity of the anode material, the coating layer may be used as an ultra-thin interface artificial SEI film, to alleviate a side reaction caused by direct contact between the material and the electrolyte during charging and discharging. This effectively reduces repeated reactions of the SEI film and improves cycle performance. In addition, this may improve a capability of the anode material to receive and store the active ion at an interface, avoid generation of dendrites, and improve safety of the secondary battery.

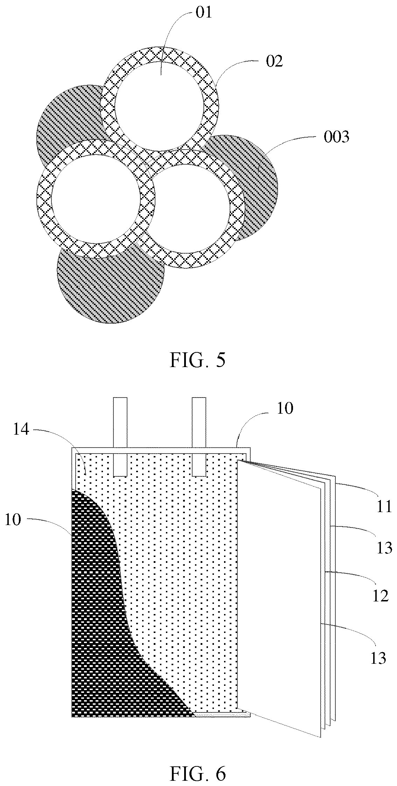

Based on a same technical concept, an embodiment of this application further provides a composite anode material. FIG. 5 is a schematic diagram of a structure of a composite anode material according to an embodiment of this application. As shown in FIG. 5, in addition to the anode material in the foregoing embodiment of this application, the composite anode material further includes an active component 003.

In an embodiment of this application, the active component 003 includes, for example, at least one of the silicon-based material, the carbon-based material, the carbide material, the metal material, or the metal oxide material.

For example, the silicon-based material includes, for example, at least one of the silicon, the nano-silicon, the micron silicon, the silicon oxide, the silicon oxide, the porous silicon, or the thin film silicon. The carbon-based material includes, for example, the artificial graphite, the natural graphite, the hard carbon, the soft carbon, the mesocarbon microbead, phosphorus doped carbon, oxygen doped carbon, nitrogen doped carbon, boron doped carbon, sulfur doped carbon, silicon doped carbon, fluorine doped carbon, the carbon nanotube, the graphene, the carbon fiber, the activated carbon, the porous carbon, the acetylene black, or the Ketjen black. The carbonized material includes, for example, at least one of silicon carbon, tin carbon, or germanium carbon. The metal material includes, for example, at least one of metal tin, micron tin, porous tin, thin film tin, metal germanium, porous germanium, thin film germanium, micron germanium, the lithium metal, the lithium-silicon alloy, a lithium-tin alloy, or a lithium germanium alloy. The metal oxide includes, for example, at least one of a tin oxide, the germanium oxide, the iron oxide, the cobalt oxide, a nickel oxide, a manganese oxide, or a zinc oxide.

In an optional embodiment, the active component 003 is selected from at least one of the artificial graphite, the natural graphite, the hard carbon, the silicon, the nano-silicon, the micron silicon, the silicon oxide, the silicon oxide, the silicon carbon, the tin, the lithium-tin alloy, the lithium-silicon alloy, the tin oxide, or the lithium metal.

In an embodiment of this application, in the composite anode material, a mass proportion of the active component 003 may be 0.1% to 20%, and specifically, the mass proportion of the active component 003 may be, for example, 0.1%, 0.5%, 1%, 1.2%, 1.5%, 1.8%, 2%, 2.5%, 3%, 4%, 5%, 8%, 10%, 12%, 14%, 16%, 18%, or 20%.

The preparation method for an anode material in this embodiment of this application includes: mixing the active component 003 and the anode material to form the composite anode material.

The mixing may be physical mixing, or may be chemical mixing. Specifically, the mixing method may be, for example, a ball milling method, a mechanical fusion method, a high temperature sintering method, an epitaxial growth method, a vapor deposition method, a magnetron sputtering method, or a solvothermal method, where the mixing method may be, for example, the ball milling method or the mechanical fusion method.

The mechanical fusion method is used as an example. In an embodiment of this application, the anode material in this embodiment of this application and a carbon material used as the active component 003 are placed in a fusion machine, and are mixed at a high speed, and the composite anode material is obtained, where the mixing rate is 10 to 2000 rpm, the mixing time is 0.1 to 12h, and a reaction temperature is 100 to 800°C.

The composite anode material in this embodiment of this application includes the anode material in this embodiment of this application. Therefore, on the basis that the anode material in embodiments of this application has high rate performance and high cycle stability, the composite anode material in this application also has the high rate performance, the high cycle stability, and safety.

Based on a same technical concept, an embodiment of this application further provides a secondary battery. The secondary battery may be a liquid secondary battery or an all-solid-state secondary battery.

FIG. 6 is a schematic diagram of a structure of a secondary battery according to an embodiment of this application. As shown in FIG. 6, the secondary battery is a secondary battery including electrolyte. Specifically, the secondary battery includes a shell 10 and a positive plate 11, a negative plate 12, and a separator 13 disposed in the shell 10, where the separator is located between the positive plate and the negative plate, and electrolyte 14 is filled between the positive plate and the negative plate and immersed in the separator 13.

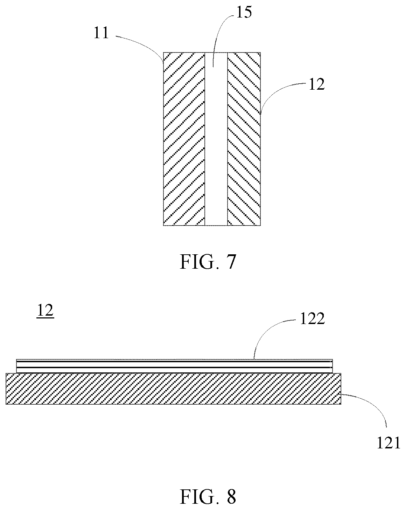

FIG. 7 is a schematic diagram of a structure of an all-solid-state secondary battery according to an embodiment of this application. As shown in FIG. 7, the secondary battery includes a positive plate 11 and a negative plate 12, and solid-state electrolyte 15 between the positive plate 11 and the negative plate 12.

FIG. 8 is a schematic diagram of a structure of the negative plate 12 according to an embodiment of this application. As shown in FIG. 8, in an embodiment of this application, the negative plate 12 includes an anode current collector 121 and an anode active substance layer 122 coated on a surface of at least one side of the anode current collector 121. The anode active substance layer 122 includes the anode material in embodiments of this application or the composite anode material in embodiments of this application.

It should be noted that, in addition to the anode material or the composite anode material in embodiments of this application, the anode active substance layer 122 may further include at least one of a conductive agent, a binder, or an auxiliary. The conductive agent may be, for example, conductive graphite, graphene, conductive carbon black, a conductive carbon ball, a carbon nanotube, or a carbon fiber. The binder may be, for example, natural rubber, butyl rubber, cisbutyl rubber, polyphenylamine, polypidoglyz, or polythiophene. The auxiliary may include, for example, a coupling agent, and may be specifically a silane coupling agent. The conductive agent, the binder, and the auxiliary are merely examples for description, and may be selected based on specific material composition when the secondary battery is prepared.

Still refer to FIG. 8. It may be understood that the negative plate 12 in this embodiment of this application may be used in a plurality of single ion battery systems such as a lithium ion battery, a sodium ion battery, a potassium ion battery, a magnesium ion battery, a calcium ion battery, or an aluminum-ion battery.

Similarly, the positive plate includes a cathode current collector and a cathode active material layer. The cathode current collector may be, for example, a foil or a mesh formed by copper, aluminum, or platinum. The cathode active material layer includes a cathode material such as lithium cobalt acid, lithium manganese acid, lithium nickel acid, lithium iron phosphate, lithium nickel cobalt manganese acid, and lithium nickel cobalt aluminate. In addition to the cathode material, the cathode active material layer may further include at least one of the conductive agent, the binder, or the additive.

The anode active material layer of the negative plate of the secondary battery provided in this embodiment of this application includes the anode material in embodiments of this application. Therefore, the secondary battery in this embodiment of this application has advantages of good cycle stability, high rate performance, and good safety.

Based on a same technical concept, an embodiment of this application further provides a terminal device. The terminal device includes the secondary battery in embodiments of this application. The terminal device includes but is not limited to an electronic apparatus, an electric vehicle, an electric power storage system, and the like. On the basis that the secondary battery in embodiments of this application has good cycle stability and rate performance, the terminal device that uses the secondary battery in embodiments of this application as a drive power supply may also obtain a same effect.

The electronic apparatus is, for example, various devices such as a computer, a mobile phone, and a display that use the secondary battery as a drive power supply.

The electric vehicle is, for example, an electric vehicle, an electric tricycle, or an electric bicycle that uses the secondary battery as a driving power supply.

The electricity storage system may be, for example, an electricity storage system that uses the secondary battery as an electricity storage source.

The following further describes the anode material in this application and the secondary battery in this application in detail with reference to specific embodiments and comparison.

### Embodiment 1

This embodiment provides a silicon anode material of a core-shell structure having a lithium phosphate coating layer. A preparation process of the anode material is as follows:
Step S1: In an environment filled with argon (water and oxygen content<0.1 ppm), weigh silicon and red phosphorus based on a mass ratio of silicon:red phosphorus=1:0.1, evenly mix the silicon and the red phosphorus in a ball mill pot, and then ball mill the silicon and the red phosphorus at a speed of 600 rpm for 12h, to obtain an intermediate product of a core-shell structure having a phosphorus shell layer.
Step S2: Pulp, coat, bake, and plate the intermediate product, a conductive agent Super P, and a binder PAA based on a mass ratio 80:10:10 to obtain an electrode plate, assemble the electrode plate with a lithium metal and a separator, inject the assembled electrode plate, lithium metal, and separator to form a battery, then perform constant-current charging (lithium intercalation) at 0.05 C, and perform 0.05 C constant-current discharging (lithium removal) to 1.0 V In this case, an intermediate product in the electrode plate forms the silicon anode material of the core-shell structure having the lithium phosphate coating layer.

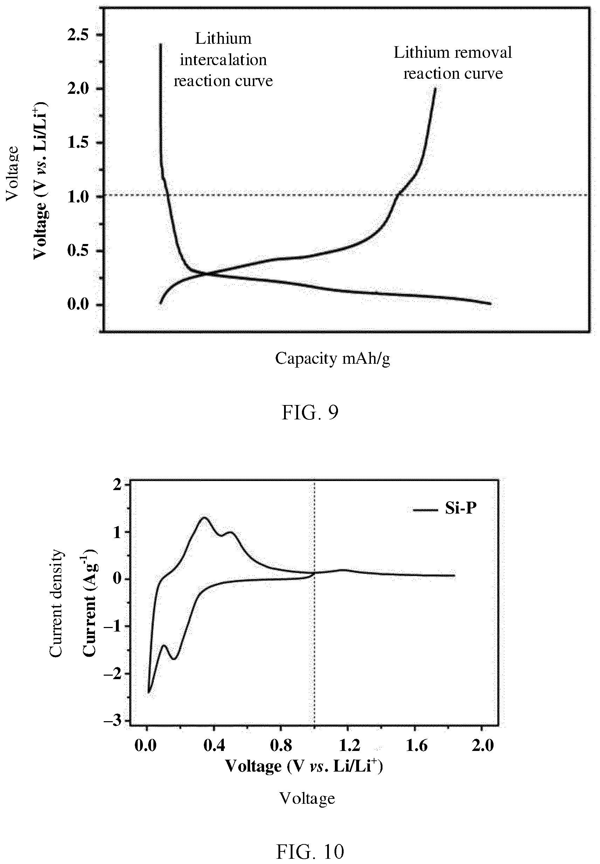

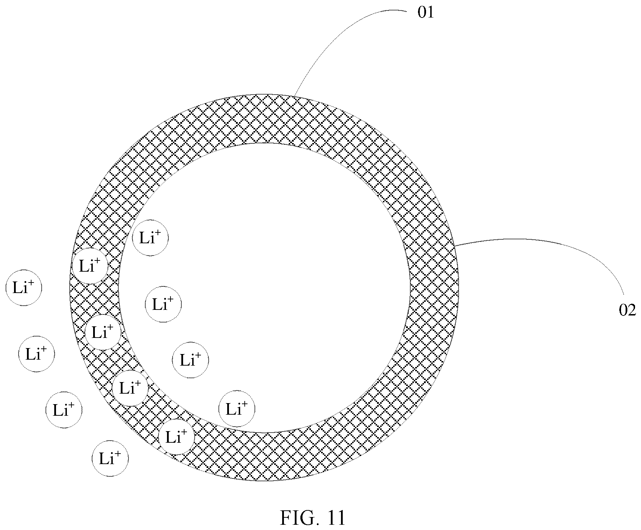

FIG. 9 shows charge and discharge curves of a Si-P anode, and FIG. 10 shows a cyclic voltammetry curve of a Si-P anode. Refer to FIG. 9 and FIG. 10. During charging, silicon Si and phosphorus P respectively undergo lithium intercalation reaction, and contribute a capacity. FIG. 11 is a schematic diagram of a lithium intercalation process of a Si-P anode. Refer to FIG. 9 to FIG. 11. During the lithium intercalation, Li⁺ first reacts with P in a coating layer 02. When P is fully intercalated, Li⁺ continues to move towards a core 01 and reacts with a substance of the core 01. When P is fully intercalated, Li_{4.4}Si and lithium phosphate LisP are respectively formed, where a lithium intercalation reaction of Si is: Si+4.4Li⁺+4.4e ⁻ →Li_{4.4}Si, and a lithium intercalation reaction of P is: P+3Li⁺+3e ⁻ →Li₃P. Then, lithium removal starts in a discharging process. A lithium-silicon alloy formed in the core has a low potential, lithium in the core is first removed. In addition, an anode working voltage of the battery is generally<1.0 V, and a detachment potential of the lithium phosphate is greater than 1.0 V Therefore, in a lithium removal process, the lithium phosphate does not undergo a removal reaction. Therefore, in this process, lithium removal is mainly performed on a silicon anode, and Li₃P remains unchanged, so that an ultra-thin inorganic SEI component may be formed on a silicon surface. This improves ion conductivity of the anode material. In the formed Li₃P structure, one Li layer is located between two Li₂P layers, and there is a good lithium ion transmission channel. Therefore, existence of the lithium phosphate may enable the silicon anode to have high ion conductivity.

### Embodiment 2

This embodiment provides a silicon carbon anode material of a core-shell structure having a lithium phosphate coating layer. A preparation process of the anode material is as follows:
Step S1: In an environment filled with argon (water and oxygen content<0.1 ppm), weigh silicon carbon and red phosphorus based on a mass ratio of silicon carbon:red phosphorus=1:0.08, evenly mix the silicon carbon and the red phosphorus in a ball mill pot, and then ball mill the silicon carbon and the red phosphorus at a speed of 650 rpm for 10h, to obtain an intermediate product of a core-shell structure having a phosphorus shell layer.
Step S2: Pulp, coat, bake, and plate the intermediate product, a conductive agent Super P, and a binder PAA based on a mass ratio 80:10:10 to obtain an electrode plate, assemble the electrode plate with a lithium metal and a separator, inject the assembled electrode plate, lithium metal, and separator to form a battery, then perform constant-current charging (lithium intercalation) at 0.05 C, and perform 0.05 C constant-current discharging (lithium removal) to 1.0 V In this case, an intermediate product in the electrode plate forms the silicon carbon anode material of the core-shell structure having the lithium phosphate coating layer.

### Embodiment 3

This embodiment provides a graphite anode material of a core-shell structure having a lithium phosphate coating layer. A preparation process of the anode material is as follows:
Step S1: In an environment filled with argon (water and oxygen content<0.1 ppm), weigh graphite and red phosphorus based on a mass ratio of graphite:red phosphorus=1:0.1, evenly mix the graphite and the red phosphorus in a ball mill pot, and then ball mill the graphite and the red phosphorus at a speed of 600 rpm for 12h, to obtain an intermediate product of a core-shell structure having a phosphorus shell layer.
Step S2: Pulp, coat, bake, and plate the intermediate product, a conductive agent Super P, and a binder PAA based on a mass ratio 80:10:10 to obtain an electrode plate, assemble the electrode plate with a lithium metal and a separator, inject the assembled electrode plate, lithium metal, and separator to form a battery, then perform constant-current charging (lithium intercalation) at 0.05 C, and perform 0.05 C constant-current discharging (lithium removal) to 1.0 V In this case, an intermediate product in the electrode plate forms the graphite anode material of the core-shell structure having the lithium phosphate coating layer.

### Embodiment 4

This embodiment provides a silicon oxide anode material of a core-shell structure having a lithium phosphate coating layer. A preparation process of the anode material is as follows:
Step S1: In an environment filled with argon (water and oxygen content<0.1 ppm), weigh silicon oxide and red phosphorus based on a mass ratio of silicon oxide:red phosphorus=1:0.08, evenly mix the silicon oxide and the red phosphorus in a ball mill pot, and then ball mill the silicon oxide and the red phosphorus at a speed of 650 rpm for 12h, to obtain an intermediate product of a core-shell structure having a phosphorus shell layer.
Step S2: Pulp, coat, bake, and plate the intermediate product, a conductive agent Super P, and a binder PAA based on a mass ratio 80:10:10 to obtain an electrode plate, assemble the electrode plate with a lithium metal and a separator, inject the assembled electrode plate, lithium metal, and separator to form a battery, then perform constant-current charging (lithium intercalation) at 0.05 C, and perform 0.05 C constant-current discharging (lithium removal) to 1.0 V In this case, an intermediate product in the electrode plate forms the silicon oxide anode material of the core-shell structure having the lithium phosphate coating layer.

### Embodiment 5

This embodiment provides a lithium metal anode material of a core-shell structure having a lithium phosphate coating layer. A preparation process of the anode material is as follows:
Step S1: In an environment filled with argon (water and oxygen content<0.1 ppm), weigh a lithium metal and red phosphorus based on a mass ratio of lithium metal:red phosphorus=1:0.06, evenly mix the lithium metal and the red phosphorus in a ball mill pot, and then ball mill the lithium metal and the red phosphorus at a speed of 500 rpm for 10h, to obtain an intermediate product of a core-shell structure having a phosphorus shell layer.
Step S2: Pulp, coat, bake, and plate the intermediate product, a conductive agent Super P, and a binder PAA based on a mass ratio 80:10:10 to obtain an electrode plate, assemble the electrode plate with a lithium metal and a separator, inject the assembled electrode plate, lithium metal, and separator to form a battery, then perform constant-current charging (lithium intercalation) at 0.05 C, and perform 0.05 C constant-current discharging (lithium removal) to 1.0 V In this case, an intermediate product in the electrode plate forms a lithium metal anode of the core-shell structure having the lithium phosphate coating layer.

### Embodiment 6

This embodiment provides a silicon carbon electrode material of a core-shell structure having a lithium sulfide coating layer. A preparation process of the anode material is as follows:
Step S1: In an environment filled with argon (water and oxygen content<0.1 ppm), weigh silicon carbon and sulfur based on a mass ratio of silicon carbon:sulfur=1 :0.08, evenly mix the silicon carbon and the sulfur in a ball mill pot, and then ball mill the silicon carbon and the sulfur at a speed of 650 rpm for 10h, to obtain an intermediate product of a core-shell structure having a sulfur shell layer.
Step S2: Pulp, coat, bake, and plate the intermediate product, a conductive agent Super P, and a binder PAA based on a mass ratio 80:10:10 to obtain an electrode plate, assemble the electrode plate with a lithium metal and a separator, inject the assembled electrode plate, lithium metal, and separator to form a battery, then perform constant-current charging (lithium intercalation) at 0.05 C, and perform 0.05 C constant-current discharging (lithium removal) to 1.0 V In this case, an intermediate product in the electrode plate forms the silicon carbon anode material of the core-shell structure having the lithium sulfur coating layer.

### Embodiment 7

This embodiment provides a silicon carbon anode material of a core-shell structure having a lithium selenide coating layer. A preparation process of the anode material is as follows:
Step S1: In an environment filled with argon (water and oxygen content<0.1 ppm), weigh silicon carbon and selenide based on a mass ratio of silicon carbon:selenide=1:0.08, evenly mix the silicon carbon and the selenide in a ball mill pot, and then ball mill the silicon carbon and the selenide at a speed of 650 rpm for 10h, to obtain an intermediate product of a core-shell structure having a selenide shell layer.
Step S2: Pulp, coat, bake, and plate the intermediate product, a conductive agent Super P, and a binder PAA based on a mass ratio 80:10:10 to obtain an electrode plate, assemble the electrode plate with a lithium metal and a separator, inject the assembled electrode plate, lithium metal, and separator to form a battery, then perform constant-current charging (lithium intercalation) at 0.05 C, and perform 0.05 C constant-current discharging (lithium removal) to 1.0 V In this case, an intermediate product in the electrode plate forms the silicon carbon anode material of the core-shell structure having the lithium selenide coating layer.

### Embodiment 8

This embodiment provides a silicon carbon anode material of a core-shell structure having a lithium telluride coating layer. A preparation process of the anode material is as follows:
Step S1: In an environment filled with argon (water and oxygen content<0.1 ppm), weigh silicon carbon and telluride based on a mass ratio of silicon carbon:telluride=1:0.08, evenly mix the silicon carbon and the telluride in a ball mill pot, and then ball mill the silicon carbon and the telluride at a speed of 650 rpm for 10h, to obtain an intermediate product of a core-shell structure having a telluride shell layer.
Step S2: Pulp, coat, bake, and plate the intermediate product, a conductive agent Super P, and a binder PAA based on a mass ratio 80:10:10 to obtain an electrode plate, assemble the electrode plate with a lithium metal and a separator, inject the assembled electrode plate, lithium metal, and separator to form a battery, then perform constant-current charging (lithium intercalation) at 0.05 C, and perform 0.05 C constant-current discharging (lithium removal) to 1.0 V In this case, an intermediate product in the electrode plate forms the silicon carbon anode material of the core-shell structure having the lithium telluride coating layer.

### Embodiment 9

This embodiment provides a silicon carbon anode material of a core-shell structure having a lithium tinned coating layer. A preparation process of the anode material is as follows:
Step S1: In an environment filled with argon (water and oxygen content<0.1 ppm), weigh silicon carbon and tin based on a mass ratio of silicon carbon:tin=1:0.08, evenly mix the silicon carbon and the tin in a ball mill pot, and then ball mill the silicon carbon and the tin at a speed of 650 rpm for 10h, to obtain an intermediate product of a core-shell structure having a tin shell layer.
Step S2: Pulp, coat, bake, and plate the intermediate product, a conductive agent Super P, and a binder PAA based on a mass ratio 80:10:10 to obtain an electrode plate, assemble the electrode plate with a lithium metal and a separator, inject the assembled electrode plate, lithium metal, and separator to form a battery, then perform constant-current charging (lithium intercalation) at 0.05 C, and perform 0.05 C constant-current discharging (lithium removal) to 1.0 V In this case, an intermediate product in the electrode plate forms the silicon carbon anode material of the core-shell structure having the lithium tin coating layer.

### Embodiment 10

This embodiment provides a silicon carbon anode material of a core-shell structure having a lithium germanium coating layer. A preparation process of the anode material is as follows:
Step S1: In an environment filled with argon (water and oxygen content<0.1 ppm), weigh silicon carbon and germanium based on a mass ratio of silicon carbon:germanium=1:0.08, evenly mix the silicon carbon and the germanium in a ball mill pot, and then ball mill the silicon carbon and the germanium at a speed of 650 rpm for 10h, to obtain an intermediate product of a core-shell structure having a germanium shell layer.
Step S2: Pulp, coat, bake, and plate the intermediate product, a conductive agent Super P, and a binder PAA based on a mass ratio 80:10:10 to obtain an electrode plate, assemble the electrode plate with a lithium metal and a separator, inject the assembled electrode plate, lithium metal, and separator to form a battery, then perform constant-current charging (lithium intercalation) at 0.05 C, and perform 0.05 C constant-current discharging (lithium removal) to 1.0 V In this case, an intermediate product in the electrode plate forms the silicon carbon anode material of the core-shell structure having the lithium germanium coating layer.

### Embodiment 11

This embodiment provides a silicon anode material of a core-shell structure having a lithium selenide coating layer. A preparation process of the anode material is as follows:
Step S1: In an environment filled with argon (water and oxygen content<0.1 ppm), weigh silicon and selenide based on a mass ratio of silicon:selenide=1:0.1, evenly mix the silicon and the selenide in a ball mill pot, and then ball mill the silicon and the selenide at a speed of 600 rpm for 12h, to obtain an intermediate product of a core-shell structure having a selenide coating layer.
Step S2: Pulp, coat, bake, and plate the intermediate product, a conductive agent Super P, and a binder PAA based on a mass ratio 80:10:10 to obtain an electrode plate, assemble the electrode plate with a lithium metal and a separator, inject the electrode plate into electrolyte to form a battery, then perform constant-current charging (lithium intercalation) at 0.05 C, and perform 0.05 C constant-current discharging (lithium removal) to 1.0 V In this case, an intermediate product in the electrode plate forms the silicon anode material of the core-shell structure having the lithium selenide coating layer.

### Embodiment 12

This embodiment provides a silicon anode material of a core-shell structure having a lithium germanium coating layer. A preparation process of the anode material is as follows:
Step S1: In an environment filled with argon (water and oxygen content<0.1 ppm), weigh silicon and germanium based on a mass ratio of silicon:germanium=1:0.1, evenly mix the silicon and the germanium in a ball mill pot, and then ball mill the silicon and the germanium at a speed of 600 rpm for 12h, to obtain an intermediate product of the core-shell structure having the germanium coating layer.
Step S2: Pulp, coat, bake, and plate the intermediate product, a conductive agent Super P, and a binder PAA based on a mass ratio 80:10:10 to obtain an electrode plate, assemble the electrode plate with a lithium metal and a separator, inject the assembled electrode plate, lithium metal, and separator to form a battery, then perform constant-current charging (lithium intercalation) at 0.05 C, and perform 0.05 C constant-current discharging (lithium removal) to 1.0 V In this case, an intermediate product in the electrode plate forms the silicon anode material of the core-shell structure having the lithium germanium coating layer.

### Embodiment 13

This embodiment provides a silicon anode material of a core-shell structure having an amorphous carbon coating layer and a lithium phosphate coating layer. A preparation process of the anode material is as follows:
Step S1: In an environment full of argon (water and oxygen content<0.1 ppm), weigh silicon, phosphorus, and lithium hydride based on a mass ratio of silicon: phosphorus: lithium hydride=1:0.05:0.05, evenly mix the silicon, the phosphorus, and the lithium hydride in a ball mill pot, and then ball mill the silicon, the phosphorus, and the lithium hydride at a speed of 600 rpm for 10h, to obtain an intermediate material of the core-shell structure having the lithium phosphate coating layer.
Step S2: Place the intermediate material and asphalt in a fusion machine for high-speed mixing, where a mixing rate is 300 revolutions/minute, mixing time is 6 hours, and a reaction temperature is 500°C, to obtain the silicon anode material of the core-shell structure having the amorphous carbon coating layer and the lithium phosphate coating layer.
Step S3: Pulp, coat, bake, and plate the anode material, a conductive agent Super P, and a binder PAA based on a mass ratio 80: 10: 10 to obtain an electrode plate, assemble the electrode plate with a lithium metal and a separator, inject the assembled electrode plate, lithium metal, and separator into electrolyte to form a battery, and perform testing based on a requirement.

### Embodiment 14

This embodiment provides a silicon carbon anode material of a core-shell structure having a hard carbon coating layer and a lithium phosphate coating layer. A preparation process of the anode material is as follows:
Step S1: In an environment full of argon (water and oxygen content<0.1 ppm), weigh silicon carbon, phosphorus, and lithium hydride based on a mass ratio of silicon carbon: phosphorus: lithium hydride=1:0.05:0.05, evenly mix the silicon carbon, the phosphorus, and the lithium hydride in a ball mill pot, and then ball mill the silicon carbon, the phosphorus, and the lithium hydride at a speed of 600 rpm for 10h, to obtain an intermediate material of the core-shell structure having the lithium phosphate coating layer.
Step S2: Place the intermediate material and polypropylene nitrile in a fusion machine for high-speed mixing, where a mixing rate is 300 revolutions/minute, and mixing time is 6 hours, and then carbonize the mixed intermediate material and polypropylene nitrile at a high temperature, where a carbonization temperature is 900°C, to obtain the silicon carbon anode material of the core-shell structure having the hard carbon coating layer and the lithium phosphate coating layer.
Step S3: Pulp, coat, bake, and plate the metal anode material, a conductive agent Super P, and a binder PAA based on a mass ratio 80:10:10 to obtain an electrode plate, assemble the electrode plate with a lithium metal and a separator, inject the assembled electrode plate, lithium metal, and separator into electrolyte to form a battery, and perform testing based on a requirement.

### Embodiment 15

This embodiment provides a silicon oxide anode material of a core-shell structure having a soft carbon coating layer and a lithium phosphate coating layer. A preparation process of the anode material is as follows:
Step S1: In an environment full of argon (water and oxygen content<0.1 ppm), weigh silicon oxide, phosphorus, and lithium hydride based on a mass ratio of silicon oxide: phosphorus: lithium hydride=1:0.05:0.05, evenly mix the silicon oxide, the phosphorus, and the lithium hydride in a ball mill pot, and then ball mill the silicon oxide, the phosphorus, and the lithium hydride at a speed of 600 rpm for 10h, to obtain an intermediate material of the core-shell structure having the lithium phosphate coating layer.
Step S2: Place the intermediate material and asphalt in a fusion machine for high-speed mixing, where a mixing rate is 300 revolutions/minute, mixing time is 6 hours, and a reaction temperature is 500°C, and then perform carbonization reaction, where a carbonization temperature is 800°C, to obtain the silicon oxide anode material of the core-shell structure having the soft carbon coating layer and the lithium phosphate coating layer.
Step S3: Pulp, coat, bake, and plate the anode material, a conductive agent Super P, and a binder PAA based on a mass ratio 80: 10: 10 to obtain an electrode plate, assemble the electrode plate with a lithium metal and a separator, inject the assembled electrode plate, lithium metal, and separator into electrolyte to form a battery, and perform testing based on a requirement.

### Embodiment 16

This embodiment provides a graphite anode material of a core-shell structure having an activated carbon coating layer and a lithium phosphate coating layer. A preparation process of the anode material is as follows:
Step S1: In an environment full of argon (water and oxygen content<0.1 ppm), weigh graphite, phosphorus, and lithium hydride based on a mass ratio of graphite: phosphorus: lithium hydride=1:0.05:0.05, evenly mix the graphite, the phosphorus, and the lithium hydride in a ball mill pot, and then ball mill the graphite, the phosphorus, and the lithium hydride at a speed of 600 rpm for 10h, to obtain an intermediate material of the core-shell structure having the lithium phosphate coating layer.
Step S2: Place the intermediate material and activated carbon in a fusion machine for high-speed mixing, where a mixing rate is 300 revolutions/minute, mixing time is 6 hours, and a reaction temperature is 500°C, to obtain the graphite anode material of the core-shell structure having the activated carbon coating layer and the lithium phosphate coating layer.
Step S3: Pulp, coat, bake, and plate the anode material, a conductive agent Super P, and a binder PAA based on a mass ratio 80: 10: 10 to obtain an electrode plate, assemble the electrode plate with a lithium metal and a separator, inject the assembled electrode plate, lithium metal, and separator into electrolyte to form a battery, and perform testing based on a requirement.

### Embodiment 17

This embodiment provides a silicon carbon anode material of a core-shell structure having a graphite coating layer and a lithium phosphate coating layer. A preparation process of the anode material is as follows:
Step S1: In an environment full of argon (water and oxygen content<0.1 ppm), weigh silicon carbon, phosphorus, and lithium hydride based on a mass ratio of silicon carbon: phosphorus: lithium hydride=1:0.05:0.05, evenly mix the silicon carbon, the phosphorus, and the lithium hydride in a ball mill pot, and then ball mill the silicon carbon, the phosphorus, and the lithium hydride at a speed of 600 rpm for 10h, to obtain an intermediate material of the core-shell structure having the lithium phosphate coating layer.
Step S2: Place the intermediate material and graphite in a fusion machine for high-speed mixing, where a mixing rate is 300 revolutions/minute, mixing time is 6 hours, and a reaction temperature is 200°C, to obtain the silicon anode material of the core-shell structure having the graphite coating layer and the lithium phosphate coating layer.
Step S3: Pulp, coat, bake, and plate the anode material, a conductive agent Super P, and a binder PAA based on a mass ratio 80: 10: 10 to obtain an electrode plate, assemble the electrode plate with a lithium metal and a separator, inject the assembled electrode plate, lithium metal, and separator into electrolyte to form a battery, and perform testing based on a requirement.

### Embodiment 18

This embodiment provides a silicon oxide anode material of a core-shell structure having a carbon nanotube coating layer and a lithium phosphate coating layer. A preparation process of the anode material is as follows:
Step S1: In an environment full of argon (water and oxygen content<0.1 ppm), weigh silicon oxide, phosphorus, and lithium hydride based on a mass ratio of silicon oxide: phosphorus: lithium hydride=1:0.05:0.05, evenly mix the silicon oxide, the phosphorus, and the lithium hydride in a ball mill pot, and then ball mill the silicon oxide, the phosphorus, and the lithium hydride at a speed of 600 rpm for 10h, to obtain an intermediate material of the core-shell structure having the lithium phosphate coating layer.
Step S2: Place the intermediate material and a carbon nanotube in a fusion machine for high-speed mixing, where a mixing rate is 300 revolutions/minute, mixing time is 6 hours, and a reaction temperature is 500°C, to obtain the silicon oxide anode material of the core-shell structure having the carbon nanotube coating layer and the lithium phosphate coating layer.
Step S3: Pulp, coat, bake, and plate the anode material, a conductive agent Super P, and a binder PAA based on a mass ratio 80: 10: 10 to obtain an electrode plate, assemble the electrode plate with a lithium metal and a separator, inject the assembled electrode plate, lithium metal, and separator into electrolyte to form a battery, and perform testing based on a requirement.

### Comparison example 1

This comparison provides an anode material, and a preparation process of the anode material is as follows:
Step S1: In an environment filled with argon (water and oxygen content<0.1 ppm), evenly mix silicon in a ball mill pot, and then ball mill the silicon at a speed of 600 rpm for 12h, to obtain a product.
Step S2: Pulp, coat, bake, and plate the product, a conductive agent Super P, and a binder PAA based on a mass ratio 80: 10: 10 to obtain an electrode plate, assemble the electrode plate with a lithium metal and a separator, inject the assembled electrode plate, lithium metal, and separator to form a battery, then perform constant-current charging (lithium intercalation) at 0.05 C, and perform 0.05 C constant-current discharging (lithium removal) to 1.0 V, to obtain the anode material.

### Comparison examples 2 to 6

Anode materials in the comparison examples 2 to 6 are separately prepared according to the method of comparison example 1. A comparison example 2 is a silicon carbon anode material, a comparison example 3 is a graphite anode material, a comparison example 4 is a silicon oxide anode material, and a comparison example 5 is a lithium metal anode material.

### Comparison example 7

This comparison provides an anode material, and a preparation process of the anode material is as follows:
Step S1: In an environment full of argon (water and oxygen content<0.1 ppm), weigh silicon carbon and lithium phosphate based on a mass ratio of silicon carbon:lithium phosphate=1:0.1, evenly mix the silicon carbon and the lithium phosphate in a ball mill pot, and then ball mill the silicon carbon and the lithium phosphate at a rotation speed of 600 rpm for 12h, to obtain an anode material of a core-shell structure having a lithium phosphate coating layer.
Step S2: Pulp, coat, bake, and plate the anode material, a conductive agent Super P, and a binder PAA based on a mass ratio 80: 10: 10 to obtain an electrode plate, assemble the electrode plate with a lithium metal and a separator, and inject the assembled electrode plate, lithium metal, and separator into electrolyte to form a battery.

### Comparison examples 8 to 10

Anode materials in the comparison examples 8 to 10 are separately prepared according to the method of comparison example 7. In comparison example 8, lithium titanate and silicon carbon are ball milled and mixed, in comparison example 9, lithium carbonate and silicon carbon are ball milled and mixed, and in comparison example 10, lithium chloride and silicon carbon are ball milled and mixed.

A rate and cycle performance of the foregoing batteries are separately tested.

### Test item and test method

(1) Perform charge and discharge capacity and first efficiency tests at 0.05 C/0.05 C, where a voltage range is 0.005 to 1.0 V
(2) Perform a rate charging test at 2.0 C/0.05 C.
(3) Perform a cycle performance test at 0.1 C/0.1 C.

Test results are listed in Table 1.

**Table 1**

| Number | Anode material | First efficiency | 100-circle capacity retention rate | 100-circle electrode plate full-electric expansion rate | 2.0 C/0.05 C retention rate |
|---|---|---|---|---|---|
| Embodiment 1 | Lithium phosphate coating silicon | 86.0% | 75.0% | 45.0% | 65.0% |
| Embodiment 2 | Lithium phosphate coating silicon carbon | 89.0% | 85.0% | 30.0% | 75.0% |
| Embodiment 3 | Lithium phosphate coating graphite | 92.0% | 95.0% | 25.0% | 80.0% |
| Embodiment 4 | Lithium phosphate coating silicon oxide | 89.0% | 85.0% | 30.0% | 70.0% |
| Embodiment 5 | Lithium phosphate coating lithium metal | 89.0% | 85.0% | 30.0% | 60.0% |
| Embodiment 6 | Lithium sulfur coating silicon carbon | 85.0% | 80.0% | 36.0% | 68.0% |
| Embodiment 7 | Lithium selenide coating silicon carbon | 86.0% | 83.0% | 33.0% | 74.0% |
| Embodiment 8 | Lithium telluride coating silicon carbon | 85.0% | 80.0% | 35.0% | 72.0% |
| Embodiment 9 | Lithium tinned coating silicon carbon | 86.0% | 82.0% | 36.0% | 73.0% |
| Embodiment 10 | Lithium germanium coating silicon carbon | 87.0% | 84.0% | 31.0% | 75.0% |
| Embodiment 11 | Lithium selenide coating silicon | 85.0% | 76.0% | 44.0% | 68.0% |
| Embodiment 12 | Lithium germanium coating silicon | 84.0% | 73.0% | 45.0% | 65.0% |
| Embodiment 13 | Amorphous carbon+lithium phosphate coating silicon | 85.0% | 78.0% | 43.0% | 68.0% |
| Embodiment 14 | Hard carbon+lithium phosphate coating silicon carbon | 88.0% | 87.0% | 30.0% | 76.0% |
| Embodiment 15 | Soft carbon+lithium phosphate coating silicon oxide | 88.0% | 88.0% | 30.0% | 73.0% |
| Embodiment 16 | Activated carbon+lithium phosphate coating graphite | 91.0% | 95.0% | 25.0% | 82.0% |
| Embodiment 17 | Graphene+lithium phosphate coating silicon carbon | 86.0% | 86.0% | 30.0% | 76.0% |
| Embodiment 18 | Carbon nanotube+lithium phosphate coating silicon oxide | 88.0% | 88.0% | 29.0% | 75.0% |
| Comparison example 1 | Silicon | 83.0% | 20.0% | 60.0% | 10.0% |
| Comparison example 2 | Silicon carbon | 85.0% | 80.0% | 50.0% | 20.0% |
| Comparison example 3 | Graphite | 92.0% | 95.0% | 26.0% | 70.0% |
| Comparison example 4 | Silicon oxide | 75.0% | 80.0% | 50.0% | 15.0% |
| Comparison example 5 | Lithium metal | 70.0% | 70.0% | 80.0% | 15.0% |
| Comparison example 7 | Lithium phosphate coating silicon carbon | 84.0% | 81.0% | 50.0% | 25.0% |
| Comparison example 8 | Lithium titanate coating silicon carbon | 83.0% | 80.0% | 50.0% | 30.0% |
| Comparison example 9 | Lithium carbonate coating silicon carbon | 83.0% | 78.0% | 50.0% | 20.0% |
| Comparison example 10 | Lithium chloride coating silicon carbon | 82.0% | 76.0% | 50.0% | 20.0% |

It should be noted that, in Embodiment 13, the amorphous carbon+lithium phosphate coating silicon represents that an outermost carbon layer is the amorphous carbon, a middle coating layer is the lithium phosphate, and a core is the silicon. For explanations in other Embodiments 14 to 18, refer to the foregoing explanations.

It can be seen from related test data of Embodiments 1 to 5 and comparison examples 1 to 5 in Table 1 that, after the silicon, the silicon carbon, the graphite, the silicon oxide, and the lithium metal are separately coated by using the lithium phosphate, the first efficiency, the 100-circle capacity retention rate, and rate performance of the battery can be improved, especially the 100-circle capacity retention rate and the rate performance of the battery, and an improvement effect is more significant. For the silicon material, after the lithium phosphate coating layer is formed, the capacity retention rate increases from 20% to 75%, and the rate performance increases from 10% to 65%.

For comparison example 1, when the silicon is directly used as the anode material, because a volume of the silicon expands after lithium intercalation, and a volume of the silicon shrinks after lithium removal, in a cycle process, a solid-state electrolyte interface SEI on a surface of a silicon anode continuously reacts to generate, remove, repair, and the like, so that active lithium ions are continuously consumed, and a capacity and a cycle of the battery are greatly attenuated. In addition, the continuously formed SEI is continuously thickened, and an organic component in the SEI layer causes a lithium ion to be blocked from spreading on the interface, thereby seriously affecting electrical performance of the silicon anode. In comparison, for the anode material in Embodiment 1, when a coating layer including lithium phosphate is formed on a surface of the silicon, because composition of an ultra-thin coating layer is similar to that of an inorganic SEI, the coating layer has high mechanical strength and low interface impedance. This can properly alleviate cyclic expansion of the silicon anode, improve ion conductivity of a silicon anode interface, and improve a rate and cycle performance.

It can be seen from the related test data of Embodiment 2 and Embodiment 6 to Embodiment 10, after the silicon carbon material is separately coated by using the lithium phosphate, the lithium sulfur, the lithium selenide, the lithium telluride, the lithium tinide, and the lithium germanium, the first efficiency, the capacity retention rate, and the rate performance of the obtained battery are different. However, compared with the battery of the comparison example 2, performance of the battery of Embodiment 2 and the batteries of the Embodiments 6 to 10 is obviously improved. Similarly, it can be seen from the related data in Embodiment 1 and Embodiments 11 and 12 that, after the silicon is coated by using the lithium phosphate, the lithium selenide, and the lithium germanium, a similar effect may also be produced.

It can be seen from the related test data of Embodiments 1 to 12 and Embodiments 13 to 18 that, by disposing the carbon layer, the 100-circle capacity retention rate and rate performance of the battery can be further improved.

Therefore, it can be learned from the test results in Table 1 that the first efficiency, the 100 cls capacity retention rate, an electrode plate expansion rate, and a 2.0 C/0.05 C retention rate in Embodiments 1 to 12 of this application are all higher than that of corresponding comparison examples. For an anode material that does not include a LixMy shell layer structure in the comparison examples 1 to 5, because the material has low ion conductivity and lacks a high mechanical strength inorganic SEI component, active lithium ions are consumed seriously in a first charging and a cycle process, and side reactions cause SEI thickening, thereby showing low coulombic efficiency and rate performance, and poor cycle retention rate and electrode plate expansion rate.

In addition, it can be seen from the comparison data in Embodiment 2 and comparison examples 7 to 10 that, after the silicon carbon anode is coated by using the lithium phosphate, the lithium titanate, the lithium carbonate, or the lithium chloride, a performance capacity retention rate and rate performance of the obtained battery are poor. A possible main reason is that, compared with the substances of comparison examples 7 to 10, a coating layer formed by the lithium phosphate is a metastable structure, and a three-layer transmission structure formed by the lithium phosphate is more favorable for transmission of lithium ions. However, the substances corresponding to the comparison examples 7 to 10 are of a stable state structure, and in a transmission process of the lithium ions, a conduction rate of the lithium ions cannot be effectively increased.

The foregoing test results show that an anode material of a core-shell structure having a LixMy coating layer structure and a carbon layer/LixMy coating layer structure has the following advantages:
(1) The LixMy coating layer may be used as an ultra-thin interface artificial SEI layer, to alleviate side reactions that occur when the material is in direct contact with electrolyte during charging and discharging, effectively reduce repeated SEI reactions, and improve cycle performance. In this way, a 100 cls cycle retention rate is improved, and an electrode plate full-electric expansion rate is reduced.
(2) The LixMy coating layer has high ion conductivity, can promote rapid ion migration on an anode interface, reduce lithium ion concentration polarization on a surface of a material, improve lithium ion removal/insertion efficiency, and exhibit excellent rate performance.

Similarly, when the secondary battery is a sodium ion battery, a potassium ion battery, a magnesium ion battery, a calcium ion battery, or an aluminum ion battery, a NaxMy coating layer, a KxMy coating layer, an MgxMy coating layer, a CaxMy coating layer, and an AlxMy coating layer that are correspondingly formed may also have similar performance.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An anode material, comprising a core and a coating layer disposed on a surface of the core, wherein the core is a substance that can be reversibly inserted into or removed from a cathode material active ion or a substance that can perform reversible oxidation-reduction reaction with the cathode material active ion, and a material of the coating layer comprises AxMy, wherein 0<x≤3, 0<y≤7, Ais a substance that is the same as the cathode material active ion, and M comprises at least one of phosphorus, sulfur, selenium, tellurium, tin, or germanium.

2. The anode material according to claim 1, wherein a thickness of the coating layer is 5 to 30 nm.

3. The anode material according to claim 1 or 2, wherein the coating layer comprises a carbon material, and a mass proportion of the carbon material is 0.1% to 20% by using a weight of the coating layer as a measurement reference.

4. The anode material according to any one of claims 1 to 3, wherein a carbon layer is disposed on a side of a surface that is of the coating layer and that is away from the core.

5. The anode material according to claim 4, wherein a thickness of the carbon layer is 5 to 20 nm.

6. The anode material according to claim 4 or 5, wherein a material of the carbon layer comprises at least one of graphite, amorphous carbon, hard carbon, soft carbon, a mesocarbon microbead, a carbon nanotube, graphene, a carbon fiber, activated carbon, porous carbon, acetylene black, Ketjen black, or asphalt.

7. The anode material according to any one of claims 1 to 6, wherein a material of the core comprises at least one of a silicon-based material, a carbon-based material, a silicon carbon material, a metal material, a metal oxide material, or phosphorus, wherein
the silicon-based material comprises at least one of silicon, nano-silicon, micron silicon, porous silicon, thin film silicon, a silicon oxide, or a silicon oxide;
the carbon-based material comprises at least one of artificial graphite, natural graphite, the hard carbon, the soft carbon, the mesocarbon microbead, the carbon nanotube, the graphene, the carbon fiber, the activated carbon, the porous carbon, the acetylene black, or the Ketjen black;
the metal material comprises at least one of a lithium metal, a sodium metal, a potassium metal, the tin, the germanium, a silicon-tin alloy, a silicon-germanium alloy, a lithium-silicon alloy, or a lithium-phosphorus alloy; and
the metal oxide comprises at least one of a tin dioxide, a germanium oxide, a cobalt oxide, or an iron oxide.

8. The anode material according to claim 7, wherein the material of the core comprises a doping element, and the doping element comprises at least one of oxygen, pyridinic nitrogen, pyrrolic nitrogen, boron, or the phosphorus; and
a mass proportion of the doping element is 0.1% to 5% by using the material of the core as a measurement reference.

9. The anode material according to any one of claims 1 to 8, wherein a mass ratio of the core to the coating layer is 100:0.1 to 1.

10. The anode material according to any one of claims 1 to 9, wherein A comprises one of lithium, sodium, potassium, magnesium, calcium, or aluminum.

11. A method for preparing the anode material according to any one of claims 1 to 10, wherein the preparation method comprises: forming the coating layer on the surface of the core.

12. The preparation method according to claim 11, wherein the forming the coating layer on the surface of the core comprises:
forming the coating layer on the surface of the core by using at least one of a ball milling method, a mechanical mixing method, a mechanical fusion method, an atomic layer deposition method, a vapor deposition method, a magnetron sputtering method, a liquid phase reaction method, a sol-gel method, a solvothermal method, a vacuum thermal deposition method, a plasma sputtering method, or a melting method.

13. The preparation method according to claim 12, wherein the forming the coating layer on the surface of the core by using the ball milling method comprises:
performing ball milling processing on a raw material comprising a core particle, an M particle, and an A source substance, wherein after the M particle reacts with the A source substance, the coating layer is formed on the surface of the core; or
performing ball milling processing on a raw material comprising a core particle, an M particle, an A source substance, and a first carbon material, wherein after the M particle reacts with the A source substance, the coating layer is formed on the surface of the core; or
performing ball milling processing on a raw material comprising a core particle and an M particle, and forming an intermediate cladding comprising M on the surface of the core, to obtain an intermediate product; and adding an A element to the intermediate cladding, and combining the M particle and the A element to perform A-based processing on the intermediate cladding to form AxMy, to form the coating layer on the surface of the core; or
performing ball milling processing on a raw material comprising a core particle, an M particle, and a first carbon material, and forming an intermediate cladding comprising M on the surface of the core, to obtain an intermediate product; and adding an A element to the intermediate cladding, and combining the M particle and the A element to perform A-based processing on the intermediate cladding, to form the carbon material on the surface of the core, wherein
an atmosphere in the ball milling processing is an inert atmosphere, a ball milling rotational speed is 400 to 1000 rpm, and ball milling time is 2 to 48h.

14. The preparation method according to claim 13, wherein the A source substance is a substance that can form the A element and a gas after decomposition, wherein
the A source substance comprises at least one of a hydride of A, an oxide of A, a nitride of A, a carbonate of A, or oxalates of A.

15. The preparation method according to claim 13, wherein the A-based processing comprises the following steps:
mixing the intermediate product with a conductive agent and a binder, coating the mixed intermediate product, conductive agent, and binder on a current collector, and drying the current collector to obtain an electrode; and
assembling the electrode and a foil of A into a secondary battery, and completing the A-based processing on the intermediate cladding after charging and discharging processing.

16. The preparation method according to claim 15, wherein a mass ratio of the intermediate product, the conductive agent, and the binder is 80 to 95:1 to 10:1 to 10.

17. The preparation method according to claim 15 or 16, wherein a current in the charging and discharging processing is 0.01 C to 1.0 C.

18. The preparation method according to any one of claims 13 to 17, wherein a mass ratio of the core particle to the M particle is 1:0.05 to 0.2, and a mass ratio of the core particle to the A-source substance is 1:0.1 to 0.5.

19. The preparation method according to any one of claims 11 to 18, wherein after the forming the coating layer on the surface of the core, the method further comprises:
forming the carbon layer on the surface of the coating layer.

20. The preparation method according to claim 19, wherein the forming the carbon layer on the surface of the coating layer comprises:
forming the carbon layer on the surface of the coating layer by using one of the ball milling method, the mechanical fusion method, a high temperature sintering method, an epitaxial growth method, the vapor deposition method, a magnetron sputtering method, or the solvothermal method.

21. The preparation method according to claim 20, wherein the forming the carbon layer on the surface of the coating layer by using the ball milling method comprises:
mixing an intermediate material formed after the core is coated by the coating layer with a carbon source material, and performing the ball milling processing; or
the forming the carbon layer on the surface of the coating layer by using the mechanical fusion method comprises:
mixing an intermediate material formed after the core is coated by the coating layer with a carbon source material, and performing mixing processing, wherein
in the ball milling processing or the mixing processing, a ball milling rotational speed or a mixing rate is 10 to 2000 revolutions/minute, ball milling time or mixing time is 0.1 to 12h, and a reaction temperature is 100 to 800°C.

22. A composite anode material, comprising an active component and the anode material according to any one of claims 1 to 10.

23. The composite anode material according to claim 22, wherein the active component comprises at least one of the silicon-based material, the carbon-based material, the carbide material, the metal material, or the metal oxide material;
the silicon-based material comprises at least one of the silicon, the nano-silicon, the micron silicon, the silicon oxide, the silicon oxide, the porous silicon, or the thin film silicon;
the carbon-based material comprises at least one of the artificial graphite, the natural graphite, the hard carbon, the soft carbon, the mesocarbon microbead, phosphorus doped carbon, oxygen doped carbon, nitrogen doped carbon, boron doped carbon, sulfur doped carbon, silicon doped carbon, fluorine doped carbon, the carbon nanotube, the graphene, the carbon fiber, the activated carbon, the porous carbon, the acetylene black, or the Ketjen black;
the carbide material comprises at least one of silicon carbon, tin carbon, or germanium carbon;
the metal material comprises at least one of metal tin, micron tin, porous tin, thin film tin, metal germanium, porous germanium, thin film germanium, micron germanium, the lithium metal, the lithium-silicon alloy, a lithium-tin alloy, or a lithium germanium alloy; and
the metal oxide comprises at least one of a tin oxide, the germanium oxide, the iron oxide, the cobalt oxide, a nickel oxide, a manganese oxide, or a zinc oxide.

24. The composite anode material according to claim 23, wherein the active component is selected from at least one of the artificial graphite, the natural graphite, the hard carbon, the silicon, the nano-silicon, the micron silicon, the silicon oxide, the silicon oxide, the silicon carbon, the tin, the lithium-tin alloy, the lithium-silicon alloy, the tin oxide, or the lithium metal.

25. The composite anode material according to any one of claims 22 to 24, wherein in the composite anode material, a mass proportion of the active component is 0.1% to 20%.

26. A method for preparing the composite anode material according to any one of claims 22 to 25, comprising: mixing the active component and the anode material to form the composite anode material.

27. A secondary battery, comprising a negative plate, wherein the negative plate comprises an anode current collector and an anode active substance layer coated on a surface of at least one side of the anode current collector, and the anode active substance layer comprises the anode material according to any one of claims 1 to 10 or the composite anode material according to any one of claims 22 to 25.

28. A terminal device, comprising the secondary battery according to claim 27.
